# EUROPEAN PATENT SPECIFICATION

(11) **EP 1 186 795 B1**
(45) Date of publication and mention of the grant of the patent: **11.01.2006**
(21) Application number: 01119880.1
(22) Date of filing: 17.08.2001
(51) Int. Cl.: F16F 9/02

(54) **Controlled-recovery pneumatic spring and apparatus including such a pneumatic spring**
Gasfeder mit kontrolliertem Rückzugsverhalten und Einrichtung mit einer solchen Gasfeder
Ressort pneumatique à contrôle du retour élastique et appareil comportant un tel ressort

(30) Priority: 29.08.2000 IT PN000051; 17.05.2001 IT PN010038
(43) Date of publication of application: 13.03.2002
(60) Divisional application: 04025900.4
(73) Proprietor: Bordignon Silvano S.p.A., 36061 Bassano del Grappa (Vicenza) (IT)
(72) Inventor: Bordignon, Romeo, 36022 Cassola, Vicenza (IT); Bordignon, Silvano, 36027 Rosà, Vicenza (IT)
(74) Representative: Giugni, Valter

(56) References cited:
- EP-A- 1 074 759
- DE-A- 4 103 948
- US-A- 3 848 710
- US-A- 3 923 294
- US-A- 4 079 925
- US-A- 5 588 641

## Description

The present invention refers to a plurarity of pneumatic springs, or gas springs, particularly designed for use in metal forming presses or, anyway, suitable for separating surfaces that are actuated with high contact pressure, provided with particular features that are effective in improving the performance thereof as compared with existing gas springs.

A pneumatic spring is generally known to be substantially constituted by one or more sealed chambers in which air, or some other gas, undergoes a compression when a load is applied.

Pneumatic springs are also known to be highly efficient since they have no rolling or sliding parts and there are no frictions or material strains in general.

These springs are used in many different applications, particularly in vehicle suspensions and the mechanical isolation of machinery parts.

Pneumatic springs are known to exist in the art in a variety of configurations and with a variety of features:
- the springs that are known in the art as "gas springs" are substantially constituted by an outer cylinder provided with a coaxial cavity extending throughout the interior thereof, an internal piston adapted to slide within said cavity so as to compress the gas contained therein, and a seal of an annular type, also known as O-ring in the art, adapted to tightly seal the junction between the inner surface of the cylinder and the side surface of the piston.

Anyway, for the purposes of this invention, the term "gas spring" as used here shall be understood to extend to also cover other types of devices that include both such gas springs as defined above and other means for either the transmission of forces, pressures and/or the conveyance and control of fluids to or from said gas springs, as all those skilled in the art will be fully capable of appreciating from the context of the following description:

A category of presses, particularly for sheet-metal forming applications, is commonly known to exist, which share a particular requirement: in fact, the devices and the gears that govern or are anyway involved in the movement of the press are specially designed and made so as to be able to produce the required force during the working stroke, or forward stroke, while they prove on the contrary quite delicate and scarcely suited to withstand considerable forces during the backward stroke of the moving die, when the latter has to be accompanied in a rather delicate manner and is subject to the action of appropriate gas springs.

The use of gas springs is therefore subject to some important limitations, one of which is due to the fact that, in the absence of special control arrangements, when the compressive force of the spring eventually ceases, the backward stroke of the piston thereof occurs in an immediate and often violent manner. Now, this fact proves quite often incompatible with the particular type of the gas spring.

In order to overcome some of these problems, the solution divulged in DE 4103948 was proposed.-

Said patent divulges a gas spring that offers a simply and effective way of slowing down in a controllable manner the return stroke of the piston, and so provides an advantageous true improvement.-

However this solution does not solve the problem of implementing a gas spring, or combinated gas/hydraulic spring, able to be both slowed down in a suitable manner, and also to be delayed in a controllable way.-

Furthermore the problem of using not only one spring alone, but a plurality of basically similar springs able to operate in a synchronised and slowed-down way during the return stroke, remains unmodified.-

Therefore it is the main purpose of the invention to provide a kind of device able to operate in the same time with a plurality of gas springs, and a kind of pneumatic spring able to overcome the cited drawbacks.-

These aims, are reached by a plurality of pneumatic springs as defined in claim 1.

Features and advantages of the present invention can anyway be more readily and clearly understood from the description of some preferred embodiments that is given in detail and illustrated below by way of non-limiting example with reference to the accompanying drawings, in which:

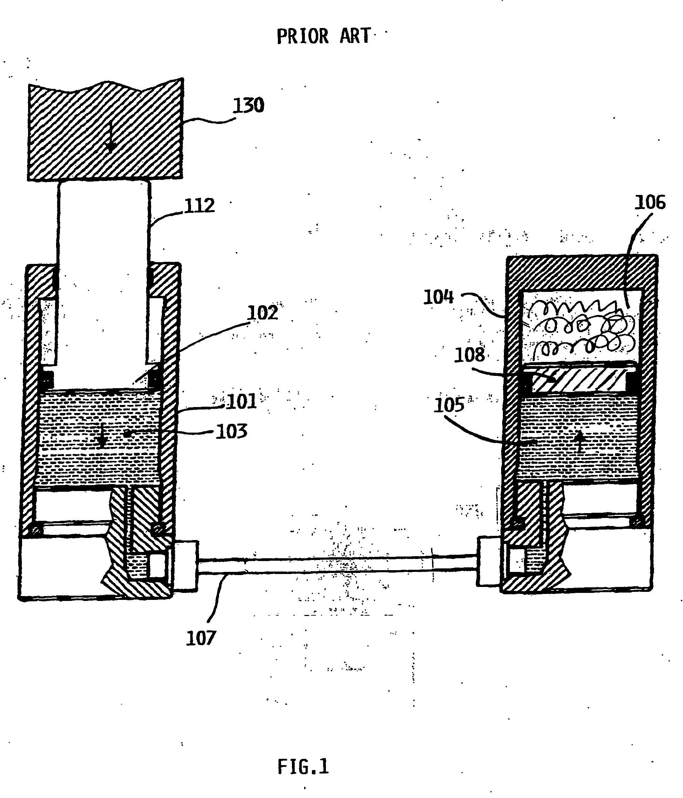

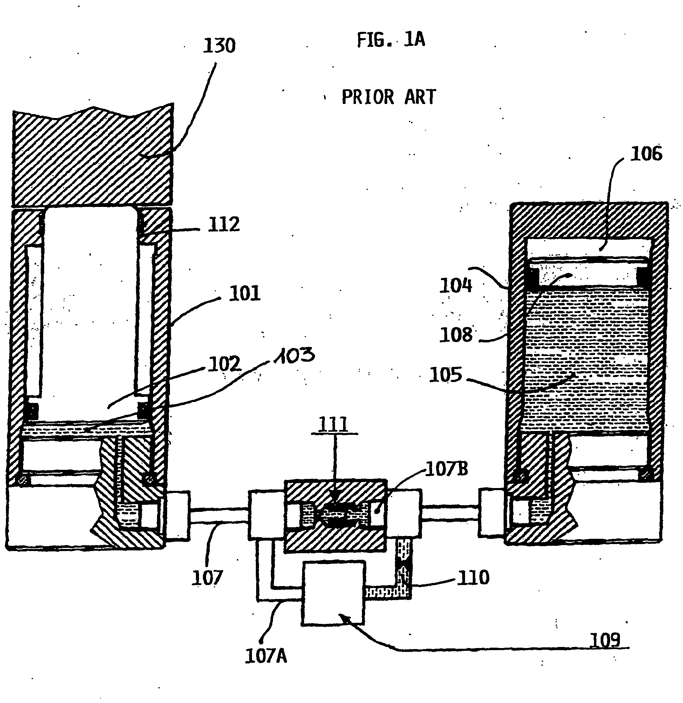

- Figures 1 and 1A are views of a prior-art embodiment, as described and indicated earlier in this description;
- Figure 2 is a schematical view of the connection of a plurality of gas springs according to the present invention to each other, along with the related connection device;
- Figure 3 and Figure 4 are views of the schematics and the device for the connection of a plurality of gas springs according to the present invention in an improved embodiment and two distinct operating states thereof, respectively.

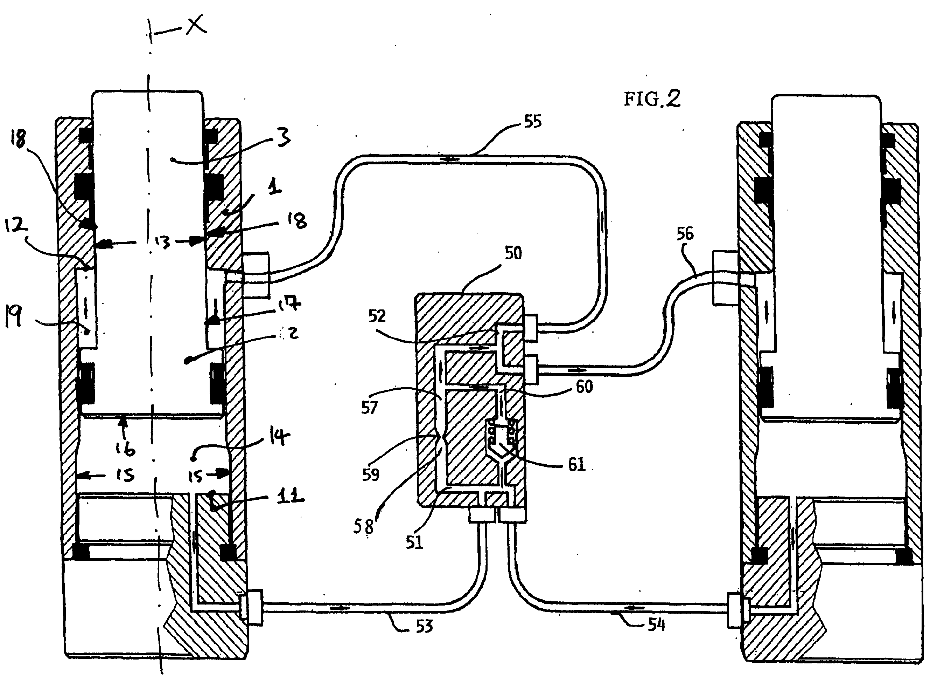

With reference to Figures 2, 3 and 4, the present invention, with appropriate adaptations, can be also and collectively applied to a plurality of gas springs that are required to operate in a synchronized manner, at least in the release phase, and in which it is suitable, or accepted, that the pressure differences between the pairs of first and second chambers, for each respective spring, are kept substantially similar as the absolute pressures and, therefore, the position of the respective pistons vary.

Figure 2 illustrates two distinct springs connected to a single adjustment device 50 comprising:
- a first header 51,
- a second header 52,
- a plurality of first channels 53, 54 connecting said first header to respective first chambers of said springs,
- a plurality of second channels 55, 56 connecting said second header to respective second chambers of said springs,
- a first conduit 57 extending between said first header 51 and said second header 52, and provided with a portion 58 having a section 59 adapted to ensure a reduced, pre-determinable flow rate,
- a second conduit 60 extending between said first header 51 and said second header 52, and provided with means adapted to act as a non-return valve 61.

It can therefore be readily appreciated that the two headers 51 and 52 are capable of levelling up at each instant the pressures in all of the first chambers and all of the second chambers, respectively, that are comprised in the respective springs. This fact brings following advantages:
a) The individual springs behave as individually braked springs as illustrated and explained above, but are practically much more simple and low-cost in their construction, since they can be manufactured according to existing prior-art techniques, while the external adjustment device is a single one, but is effective for a plurality of springs.
b) All pistons of the springs are capable of performing their return or backward stroke in a braked manner, although not necessarily in an identical manner in the case that they are pressed at different moments.
c) When using substantially similar springs that are released at the same moment, the rejection speed of the pistons is levelled off and the pistons are in this way synchronized automatically, without any additional external control and/or actuation device being needed.

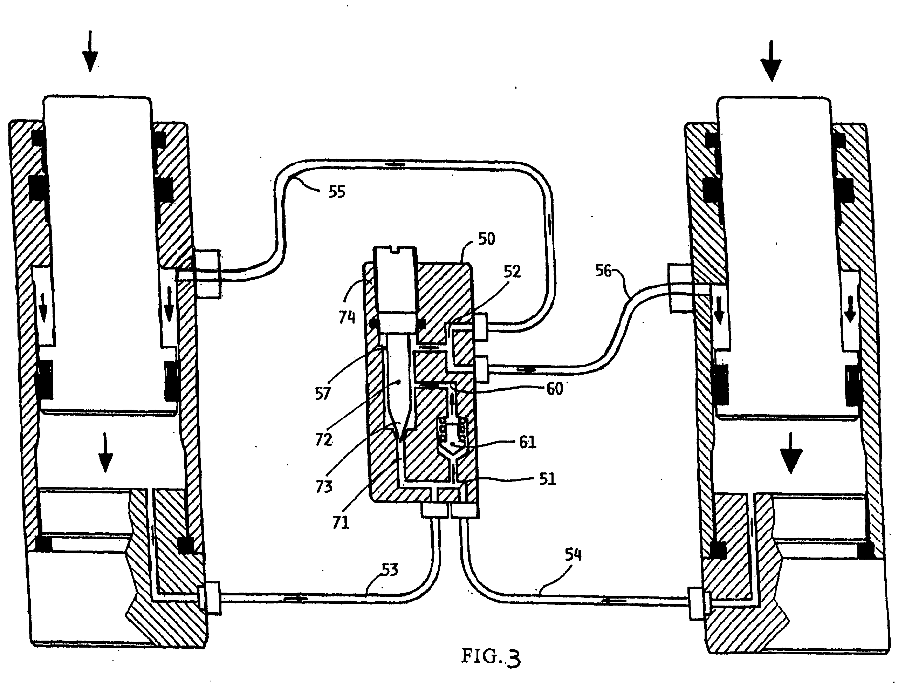

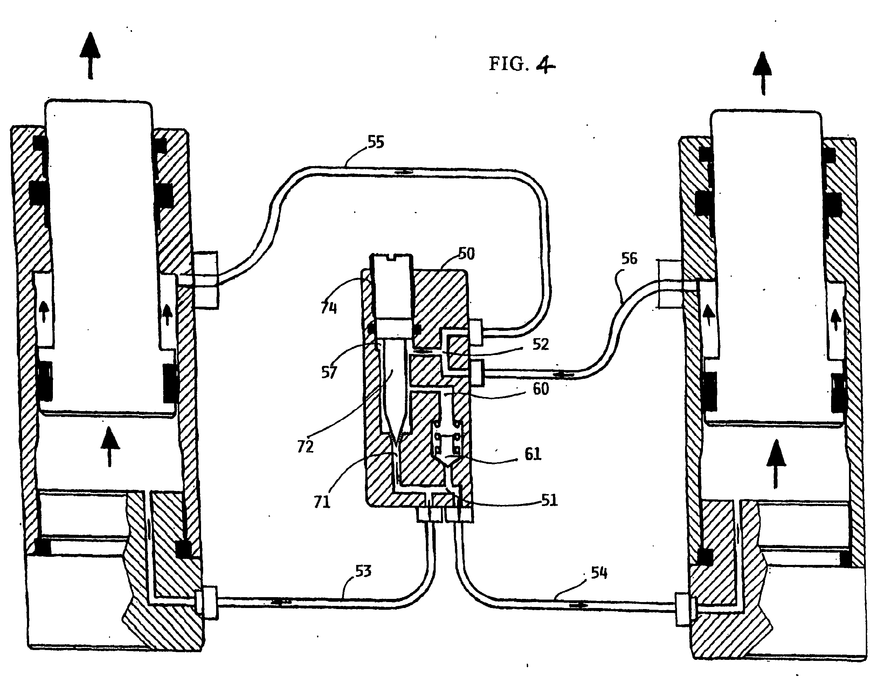

It is furthermore desirable that the braked rejection speeds of the pistons are capable of being adjusted at will. To this purpose, it proves quite useful for said adjustment device 50 to be implemented as illustrated in Figures 3 and 4, ie. with said first conduit 57 being provided with a narrowing 71 at an intermediate portion thereof, wherein an appropriate throttling member 72, which is provided with a reduced, preferably cone-shaped section 73, is inserted at least partially in said narrowing 71.

In an advantageous manner, said throttling member 72 engages in an adjustable manner, preferably by means of a screw/nut screw coupling 74, the body of said adjustment device 50, in such a manner as to make it possible for the position of said throttling member 72 to be varied relative to said device 50 and, as a result, the flow rate between said narrowing 71 and the respective throttling member 72 to be adjusted accordingiy.

## Claims

1. A plurality of pneumatic springs, each of them comprising:
- a hollow casing (1) having two preferably parallel walls, (11,12) in which, a second one (12) of these walls is provided with a central, outwardly opening aperture (13),
- a piston (2) adapted to slidably move along an axis (X), in a substantially fluid-tight manner, within said hollow casing and delimiting a first variable-volume chamber (14) containing an appropriate gas and constituted by said first wall (11), portions (15) of the inner side walls of said hollow casing, as well as the inner face (16) of said piston, which is further adapted to act upon the gas contained in said variable-volume chamber,
- a preferably cylindrical stem (3) connected with an extremity thereof to a central portion of said piston and passing through said central aperture (18) in said second wall (12) so as to enable the side surface (17) of said stem to couple in a substantially fluid-tight manner with the cylindrical zone (18), arranged orthogonally with respect to the direction of said axis (X), of said aperture of said second wall,
- a second variable-volume chamber (19) delimited by a variable portion of said side surface (17) of said stem, the annular portion (20) of the surface of said piston lying outside the stem-to-piston junction perimeter (21), and the inner annular portion (22) of said second wall, **characterized in that** they are connected to a single regulation device (50) adapted to automatically control the rejection of the respective pistons, after a phase in which these pistons have been inserted in the respective hollow casings, so as to enable the respective rejection speeds to be slowed down and possibly synchronized, said regulation device (50) comprising:
- a first header (51),
- a second header (52),
- a plurality of first channels (53, 54) connecting said first header to respective first chambers of said springs,
- a plurality of second channels (55, 56) connecting said second header to respective second chambers of said springs,
- a first conduit (57) situated between said first header and said second header, and provided with a portion (58) having a passage section (59) which is adapted to ensure a pre-determinable flow rate, and which is preferably capable of being adjusted in a selective manner,
- a second conduit (60) situated between said first header and said second header, and provided with means adapted to act as a non-return valve (61).

2. Plurality of pneumatic springs according to claim 1, **characterized in that** said pre-determinable flow-rate passage section in said first conduit (57) is obtained through the narrowing (71) of a length thereof, and there is provided a choke member (72) inserted at least partially in said length of conduit and terminating with a reduced-section, preferably conical portion (73) adapted to move at least partially into said narrowing (71) of said first conduit.

## Patentansprüche

1. Vielzahl von Gasfedem, wobei jede von ihnen umfasst:
ein hohles Gehäuse (1) mit zwei vorzugsweise parallelen Wänden (11, 12), wobei eine zweite (12) dieser Wände mit einer mittigen sich nach außen öffnenden Öffnung (13) versehen ist.
einen Kolben (2), der so eingerichtet ist, dass er sich entlang einer Achse (X) im Wesentlichen fluiddicht in dem hohlen Gehäuse gleitend bewegt und eine erste Kammer (14) mit veränderlichem Volumen begrenzt, die ein geeignetes Gas enthält und durch die erste Wand (11), Teile (15) der Innenseitenwände des hohlen Gehäuses sowie die Innenfläche (16) des Kolbens gebildet wird und der des Weiteren so eingerichtet ist, dass er auf das Gas wirkt, das in der Kammer mit veränderlichem Volumen enthalten ist;
einen vorzugsweise zylindrischen Schaft (3), der an einem äußeren Ende desselben mit einem Mittelteil des Kolbens verbunden ist und durch die mittige Öffnung (18) in der zweiten Wand (12) hindurchtritt, so dass die Seitenfläche (17) des Schaftes auf im Wesentlichen fluiddichte Weise mit der zylindrischen Zone (18) in Verbindung treten kann, die in Bezug auf die Richtung der Achse (X) der Öffnung der zweiten Wand rechtwinklig angeordnet ist,
eine zweite Kammer (19) mit veränderlichem Volumen, die durch einen veränderlichen Teil der Seitenfläche (17) des Schaftes, den ringförmigen Abschnitt (20) der Fläche des Kolbens, der außerhalb des Schaft-Kolben-Verbindungsumfangs (21) liegt, und den inneren ringförmigen Abschnitt (22) der zweiten Wand begrenzt wird, **dadurch gekennzeichnet, dass** sie mit einer einzelnen Reguliervorrichtung (50) verbunden sind, die so eingerichtet ist, dass sie automatisch das Ausfahren der entsprechenden Kolben nach einer Phase steuert, in der diese Kolben in den entsprechenden hohlen Gehäuse eingeführt gewesen sind, um so Verlangsamung der entsprechenden Ausfahrgeschwindigkeiten und möglicherweise Synchronisierung derselben zu ermöglichen, wobei die Reguliervorrichtung (50) umfasst:
einen ersten Verteiler (51),
einen zweiten Verteiler (52),
eine Vielzahl erster Kanäle (53, 54), die den ersten Verteiler mit entsprechenden ersten Kammern der Federn verbinden,
eine Vielzahl zweiter Kanäle (55, 56), die den zweiten Verteiler mit entsprechenden zweiten Kammern der Federn verbinden,
eine erste Leitung (57), die sich zwischen dem ersten Verteiler und dem zweiten Verteiler befindet und mit einem Teil (58) versehen ist, der einen Durchlassabschnitt (59) hat, der so eingerichtet ist, dass er eine vorbestimmbare Durchflussrate gewährleistet, und der vorzugsweise selektiv eingestellt werden kann,
eine zweite Leitung (60), die sich zwischen dem ersten Verteiler und dem zweiten Verteiler befindet und mit einer Einrichtung versehen ist, die so eingerichtet ist, dass sie als ein Rückschlagventil (61) wirkt.

2. Vielzahl von Gasfedern nach Anspruch 1, **dadurch gekennzeichnet, dass** der Durchlassabschnitt für vorbestimmbare Durchflussrate in der ersten Leitung (57) durch die Verengung (71) eine Strecke derselben erzeugt wird, und ein Drosselelement (42) vorhanden ist, das wenigstens teilweise in die Strecke der Leitung eingeführt ist und mit einem vorzugsweise konischen Teil (73) mit verringertem Durchmesser endet, der so eingerichtet ist, dass er sich wenigstens teilweise in die Verengung (71) der ersten Leitung hineinbewegt.

## Revendications

1. Pluralité de ressorts pneumatiques, chacun d'entre eux comprenant:
- un carter creux (1) comprenant deux parois de préférence parallèles (11, 12) dans lesquelles une seconde paroi (12) de ces parois comporte une ouverture centrale s'ouvrant vers l'extérieur (13) ;
- un piston (2) adapté pour se déplacer en coulissement le long d'un axe (X), de manière essentiellement étanche aux fluides, à l'intérieur dudit carter creux et délimitant une première chambre à volume variable (14) contenant un gaz approprié et qui est constituée par ladite première paroi (11), par des parties (15) des parois latérales internes dudit carter creux, de même que par la face interne (16) dudit piston, qui est en outre adapté pour agir sur le gaz contenu dans ladite chambre à volume variable ;
- une tige de préférence cylindrique (3) connectée à une extrémité de celle-ci à une partie centrale dudit piston et passant au travers de ladite ouverture centrale (18) aménagée dans ladite seconde paroi (12) dé manière à permettre un accouplement de la surface latérale (17) de ladite tige de manière essentiellement étanche aux fluides avec la zone cylindrique (18), aménagée de manière orthogonale par rapport à la direction dudit axe (X), de ladite ouverture de ladite seconde paroi ;
- une seconde chambre à volume variable (19) délimitée par une partie variable de ladite surface latérale (17) de ladite tige, la partie annulaire (20) de la surface dudit piston reposant à l'extérieur du périmètre de connexion tige / piston (21) et de la partie annulaire interne (22) de ladite seconde paroi, **caractérisée en ce qu'**ils sont connectés à un dispositif de régulation unique (50) adapté pour commander automatiquement le rejet des pistons respectifs, après une phase dans laquelle ces pistons ont été introduits dans les carters creux respectifs, de manière à permettre de ralentir voire de synchroniser les vitesses de rejet respectives, ledit dispositif de régulation (50) comprenant :
- un premier collecteur (51) ;
- un second collecteur (52) ;
- une pluralité de premiers canaux (53, 54) connectant ledit premier collecteur à des premières chambres respectives desdits ressorts ;
- une pluralité de seconds canaux (55, 56) connectant ledit second collecteur à des secondes chambres respectives desdits ressorts ;
- un premier conduit (57) situé entre ledit premier collecteur et ledit second collecteur et comportant une partie (58) comprenant une section de passage (59) qui est adaptée pour assurer un débit pouvant être prédéterminé et qui, de préférence, est capable d'être réglée de manière sélective ;
- un second conduit (60) situé entre ledit premier collecteur et ledit second collecteur et comportant des moyens adaptés pour agir en tant que clapet anti-retour (61).

2. Pluralité de ressorts pneumatiques selon la revendication 1, **caractérisée en ce que** ladite section de passage de débit pouvant être prédéterminé disposée dans ledit premier conduit (57) est obtenue grâce au rétrécissement (71) d'une longueur de celui-ci, et **en ce qu'**il est fourni un élément d'étranglement (72) introduit au moins en partie dans ladite longueur de conduit et se terminant par une section réduite, de préférence une partie conique (73), adaptée pour se déplacer au moins en partie à l'intérieur dudit rétrécissement (71) dudit premier conduit.
